# EUROPÄISCHE PATENTSCHRIFT

(11) **EP 1 340 718 B1**
(45) Veröffentlichungstag und Bekanntmachung des Hinweises auf die Patenterteilung: **20.09.2006**
(21) Anmeldenummer: 03002780.9
(22) Anmeldetag: 07.02.2003
(51) Int. Cl.: C02F 1/32, C02F 1/78

(54) **Vorrichtung zur Entkeimung von Wasser mittels UV-Strahlen und mit Hilfe eines einen Reinigungsstöpsel enthaltenden Quartzglasrohres**
Apparatus for sterilizing water by UV-radiation and by means of a quartz tube comprising a purifying plug
Dispositif de stérilisation d'eau avec une lampe U.V. et à l'aide d'un tube en verre de quartz contenant un bouchon de nettoyage

(30) Priorität: 12.02.2002 DE 10205655
(43) Veröffentlichungstag der Anmeldung: 03.09.2003
(73) Patentinhaber: Vitt, Wolfgang, 65232 Taunusstein (DE)
(72) Erfinder: Vitt, Wolfgang, 65232 Taunusstein (DE)
(74) Vertreter: Dahlmann, Gerhard

(56) Entgegenhaltungen:
- EP-A- 0 602 505
- WO-A-99/40032
- DE-U- 29 802 771
- US-A- 5 534 142

## Beschreibung

Für die Entkeimung von Wasser werden Vorrichtungen benutzt, die mit UV-Strahlen arbeiten. Die UV-Strahlen werden von einem UV-Strahler erzeugt, der in einer Kammer angeordnet ist und das zu reinigende Wasser wird in einem Quarzglasrohr parallel zum UV-Strahler entlanggeleitet.

Ein Problem dieser Art Vorrichtungen liegt darin, daß an den Quarzglasrohren in ihrem Inneren sich Schmutzpartikel absetzen. Es ist deshalb bekannt, Reinigungsmöglichkeiten vorzusehen. Eine solche ist beispielsweise in dem Gebrauchsmuster DE-U-29802771 enthalten. Sie besteht aus einem in das Glasrohr eingesetzten Reinigungskolben, der an einem Federzug aufgehängt ist. Das Wasser strömt von oben nach unten durch das Glasrohr und nimmt den Kolben mit. Letzterer ist mit O-Ringen versehen, mit denen der Schmutz von der Innenwand abgestreift wird. Bei dieser Lösung kommt es jedoch zu Druckverlusten, da die Federkraft überwunden werden muß.

Durch die DE 198 32 431 A1 ist eine besonders einfach und kostengünstig ausgebildete Vorrichtung zur Entkeimung eines Fluids bekannt geworden, bei der UV-C-Strahler eingesetzt werden, die elektromagnetische Wellen sowohl im gewebezerstörenden Bereich von 253,7 nm als auch im Ozon erzeugenden Bereich unterhalb von 200 nm aussenden. Dadurch wird eine besonders gute Reinigung des Fluids erzielt.

Das Dokument EP-A-0602505 zeigt eine Vorrichtung zur Entkeimung einer Flüssigkeit. Über eine Mischkammer wird Flüssigkeit zusammen mit einem Oxidationsmittel in einen rohrförmigen Körper geleitet und mit UV-Strahlung behandelt. Zentrisch im rohrförmigen Körper befindet sich ein Innenreflektor, der auch als Fühung für eine Ringspaltbürste dient. Die Ringspaltbürste wird mit der zu behandelnden Flüssigkeit nach oben geführt.

Ausgehend von diesem Stand der Technik liegt der vorliegenden Erfindung die Aufgabe zugrunde, eine verbesserte Entkeimungsvorrichtung zu schaffen, die in ihrem Aufbau einfach und kostengünstig ist und eine optimale Entkeimung des Wassers ergibt. Die Vorrichtung soll auch mit Ozon arbeiten können. Sie soll auf äußerst einfache Weise eine Reinigung der Innenflächen des Quarzglasrohres ermöglichen und über das Ozon soll eine Oxidation von organischen Verbindungen erfolgen. Weiterhin soll über das Ozon eine Depotwirkung ähnlich der Beigabe von Chlor erreicht werden.

Die Lösung der gestellten Aufgabe wird bei einer Vorrichtung zur Entkeimung von Wasser mittels UV-Strahlen, mit einem Quarzglasrohr, durch welches das Wasser fließt, und einem das Quarzglasrohr einfassenden Gehäuse, das eine Kammer bildet, in der der oder die UV-Strahler angeordnet ist oder sind, erfindungsgemäß dadurch erreicht, daß in das Quarzglasrohr ein längs des Quarzglasrohres mit der Wasserströmung verschiebbarer Reinigungsstöpsel eingesetzt ist und daß die Vorrichtung Bypassleitungen für die Wasserführung mit Absperrventilen hat, so daß bei entsprechender Betätigung der Absperrventile eine Verringerung oder Umkehr der Strömungsrichtung des Wassers im Quarzglasrohr und damit eine Auf- und Abbewegung des Stöpsels bewirkt wird. Der Reinigungsstöpsel besteht aus einem den Wasserdurchfluß sperrenden Glied und wenigstens einer an der Innenfläche des Quarzglasrohres entlang streifenden Reinigungsbürste und/oder Reinigungslippe. Letztere ist bevorzugt aus einem polymeren Material. Der Reinigungsstöpsel kann mit Leitflügeln versehen sein, die ihn in eine Drehbewegung versetzen.

Die Bypassleitungen und Ventile sind so angeordnet, daß die Strömungsrichtung des Wassers beliebig variiert werden kann, damit der Stöpsel seine Auf- und Abbewegung durchführt. die einfachste Möglichkeit der Wasserführung besteht darin, daß der Wasserzufluß in das Quarzglasrohr abgesperrt wird. Dadurch sinkt der Stöpsel nach unten. Nach erneutem Öffnen der Zufuhrleitung steigt der Stöpsel wieder hoch. Bei beiden Bewegungen werden eventuelle Verunreinigungen von der Innenfläche des Glasrohres abgestreift. Mehrmalige Wiederholungen ergeben eine gute Reinigung.

An den Enden des Quarzglasrohres sind Stutzen mit vergrößertem Durchflußquerschnitt angebracht. Diese Stutzen dienen zur Aufnahme des Reinigungsstöpsels in seinen Endlagen und geben dabei gleichzeitig den Wasserdurchfluß frei. Die Stutzen sind mit einer inneren konischen Erweiterung versehen. In jede Erweiterung ist ein Haltekorb für den Reinigungsstöpsel eingefügt. Diese Haltekörbe haben einen an der konischen Innenwand des Stutzens anliegenden Stützring mit davon ausgehenden Führungsstreben. Eine Anzahl von drei Führungsstreben ist günstig für die zentrische Halterung des Reinigungsstöpsels. Für die Anbringung der Haltekörbe sind die Innenwände der Stutzen mit Nuten versehen, in die die Bodenränder der Haltekörbe eingesetzt sind.

Der Reinigungsstöpsel ist in seiner Axialrichtung gesehen symmetrisch ausgebildet, so daß er bei seinen Bewegungen in gleicher Weise die Glaswandreinigung durchführen kann. Bevorzugt besteht der Reinigungsstöpsel aus einem Kreuzgestänge mit mehreren ringförmigen Reinigungsbürsten und/oder Reinigungslippen.

Zur Unterstützung der Reinhaltung der Glasfläche kann dieselbe mit einer einen "Lotuseffekt" ergebenden Rauhigkeit versehen sein. Hierdurch wird das Anhaften von Schmutzpartikeln vermindert.

Eine Verwirbelung des Wassers wird in der Regel durchgeführt, um eine bessere Entkeimung zu erreichen.

Schließlich ist es günstig, wenn die durch das Gehäuse geführte Luft vorgereinigt wird, beispielsweise durch entsprechende Filter, und mit UV-Strahlern bestrahlt wird, die im Ozon erzeugenden Bereich liegen. Das erzeugte Ozon wird über einen Ozonmischer dem entkeimten Wasser beigegeben.

### Ausführungsbeispiel

Anhand der beigefügten Zeichnung wird die Erfindung nachstehend näher erläutert. Es zeigt:
- Fig. 1: die Vorrichtung mit zugehörigem Schaltschema für die Wasser- und Luftführung,
- Fig. 2: den oberen Teil der Vorrichtung im Längsschnitt,
- Fig. 3: den Reinigungsstöpsel in der Seitenansicht,
- Fig. 4: den Reinigungsstöpsel in der Draufsicht,
- Fig. 5: einen Haltekorb in der Seitenansicht und
- Fig. 6: den Haltekorb in der Draufsicht.

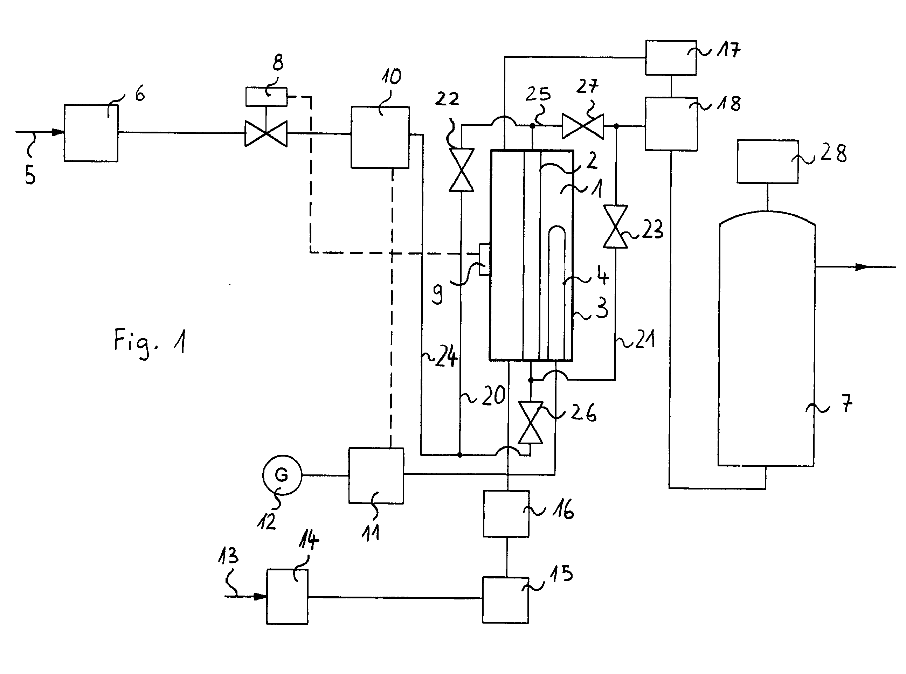

In der Fig. 1 ist die Entkeimungsvorrichtung 1 mit den zugehörigen Schaltschemata für die Wasser- und Kühlluftführung sowie Ozonbeigabe gezeigt. Die Vorrichtung 1 besteht im Wesentlichen aus dem Quarzglasrohr 2, durch welches das zu reinigende Wasser fließt, und das das Rohr 2 umgebende Gehäuse 3, durch das die Kühlluft geleitet wird, und das einen oder mehrere UV-Strahler aufnimmt. Das zu reinigende Wasser wird über die Leitung 5 einem Rückspülfilter 6 zugeführt und von dort dem unteren Ende des Quarzglasrohres 2. Das Wasser durchströmt das Rohr 2 und wird der entkeimenden UV-Strahlung ausgesetzt. Danach wird das Wasser einem Wasserspeicher 7 zugeführt. Auf dem Wasserspeicher befindet sich ein Gasentlüfter 28, über den die übrigen Luft-Ozon- bzw. Oxidationsverbindungen ausgeschieden werden. Über den Aktivkohlefilter werden Ozonreste neutralisiert. In die Wasserleitung 5 kann ein Magnetventil 8 eingesetzt sein, das von dem am Gehäuse 3 angebrachten Sensor 9 in Abhängigkeit von der Strahlerleistung oder bei Ausfall der Strahler angesteuert wird. Weiter ist es möglich, einen Wassermengenzähler 10 einzufügen, der neben seiner Funktion als Mengenzähler noch das Regelgerät 11 für das Regeln der Strahlerleistung des UV-Strahlers 4 betätigt. Der UV-Strahler 4 wird von der Energiequelle 12 gespeist.

Die Luftzufuhr erfolgt über den Luftschacht 13. Zunächst wird die Luft dem Luftfilter 14 zugeleitet, von dort dem Drucklufterzeuger 15 und anschließend dem Lufttrockner 16. Die getrocknete Luft wird in das Gehäuse 3 eingebracht und dient dort der Kühlung. Gleichzeitig wird die Luft im Gehäuse 3 von einem UV-C-Strahler mit unterhalb von 180nm liegenden elektromagnetischen Wellen bestrahlt, so daß Ozon erzeugt wird. Die ozonbeladene Luft wird einem Ozonregler 17 und von dort dem Ozonmischer 18 zugeführt. Über den Ozonmischer 18 wird das Ozon dem entkeimten Wasser beigemischt und es wird eine ergänzende Reinigung des Wassers durch Gewebeabtötung erreicht. Zusätzlich erfolgt eine Oxidation von organischen Verbindungen und eine Depotwirkung ähnlich einer Chlorbeigabe.

An der Vorrichtung 1 sind die Bypassleitungen 20 und 21 angebracht, in die Absperrventile 22 und 23 eingebaut sind. In die Zu- und Abflußleitungen 24 und 25 zum bzw. vom Quarzglasrohr 2 sind Hauptabsperrventile 26 und 27 eingesetzt. Durch die Ventile 22, 23 und 26, 27 kann die Durchflußmenge des Wassers durch das Quarzglasrohr 2 geregelt werden. Außerdem wird auch die Flußrichtung von unten nach oben oder umgekehrt geregelt. Bei geschlossenen Ventilen 22 und 23 und geöffneten Ventilen 26 und 27 strömt dasWasser von unten nach oben durch das Quarzglasrohr 2. Wenn die Ventile 26 und 27 geschlossen und die Ventile 22 und 23 geöffnet sind, so strömt das Wasser von oben nach unten durch das Quarzglasrohr 2. Entsprechend der Strömungsrichtung wird der im Glasrohr 2 vorhandene Reinigungsstöpsel nach oben oder unten bewegt. Es können auch Magnetventile eingesetzt werden, die elektrisch über eine Zeitschaltuhr oder einen Sensor angesteuert werden.

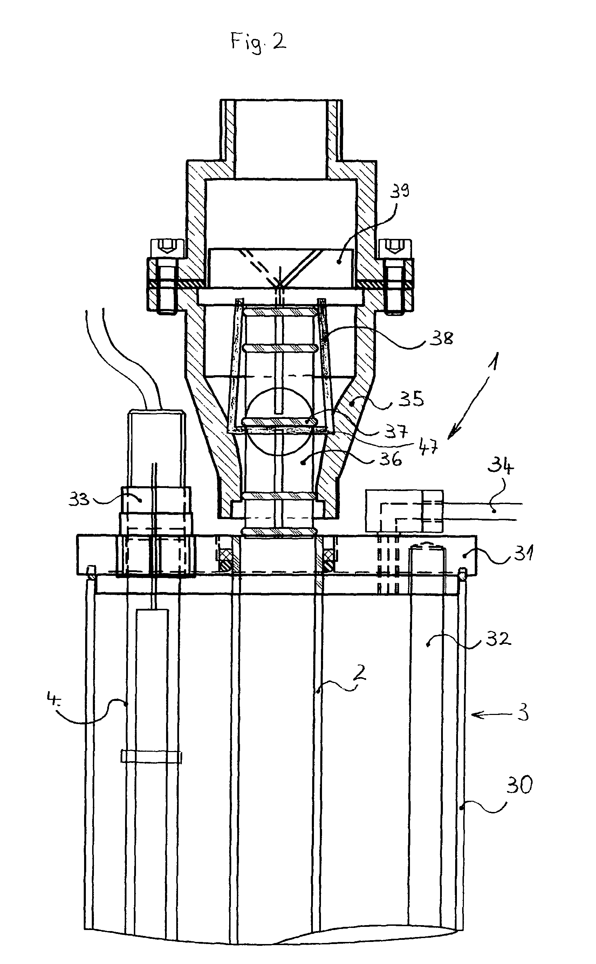

In der Fig. 2 ist der obere Teil der Vorrichtung 1 im Längsschnitt gezeigt. Das Gehäuse 3 besteht aus einem Zylinder 30 aus Aluminium, dessen Öffnungen mit Metallplatten 31 abgedeckt sind. Die Metallplatten 31 sind miteinander über Gewindestäbe 32 verschraubt. In zentrische Öffnungen in den Metallplatten 31 ist das Quarzglasrohr 2 eingefügt und der UV-Strahler 4 in den Lampensockel 33 eingesetzt. Außerdem ist ein Luftabfuhrschlauch 34 angeschlossen. Leicht nach oben versetzt gezeichnet ist der Stutzen 35, der den Reinigungsstöpsel 36 aufnimmt. Der Stutzen 35 ist konisch erweitert, sodaß das Wasser seitlich am Reinigungsstöpsel 36 vorbeiströmen kann. Der Reinigungsstöpsel 36 hat mehrere Reinigungslippen 37. Er wird von dem Haltekorb 38 in zentrischer Lage gehalten. Oberhalb des Haltekorbs 38 ist eine Drallplatte 39 eingefügt, die dem durchströmenden Wasser einen gewollten Drall erteilt.

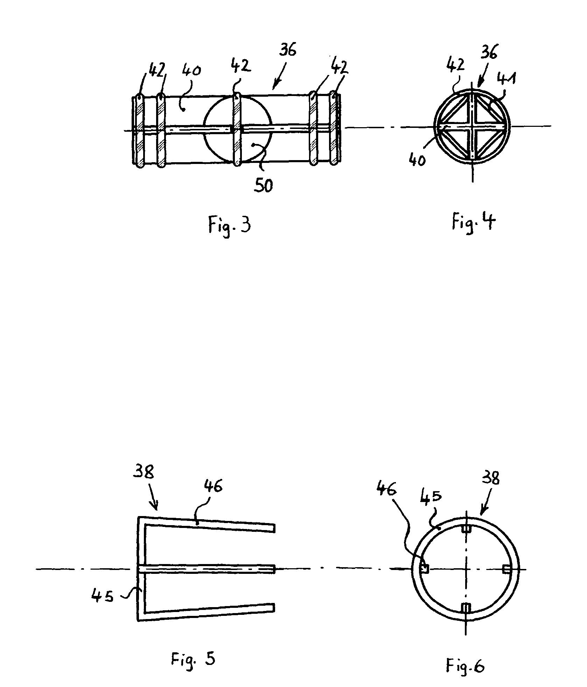

In der Fig. 3 und 4 ist eine mögliche Ausführungsform des Reinigungsstöpsels 36 gezeigt. Der Stöpsel 36 ist zu seiner mittleren Querschnittsfläche hin symmetrisch aufgebaut. Er besteht aus einem Kreuzgestänge 40 , das zusätzlich mit den Verstrebungen 41 an beiden seiner Enden verstärkt ist. In seiner Mitte, axial gesehen, und an seinen Enden sind die Abstreifringe 42 angebracht, die als Reinigungslippen dienen und an den Innendurchmesser des Glasrohres 2 entsprechend angepaßt sind.

In den Fig. 5 und 6 ist ein Haltekorb 38 in der Seitenansicht bzw. in der Draufsicht gezeigt. Der Haltekorb 38 hat einen Stützring 45, von dem vier Führungsstreben 46 ausgehen. Der Stutzen 35 ist mit einer Nut 47 versehen, in welche der Stützring 45 eingefügt ist (s. Fig. 1).

## Patentansprüche

1. Vorrichtung zur Entkeimung von Wasser mittels UV-Strahlen, mit einem an Zu- und Abflussleitungen angeschlossenen Quarzglasrohr, durch welches das Wasser fließt, und einem das Quarzglasrohr einfassenden Gehäuse, das eine Kammer bildet, in der der oder die UV-Strahler angeordnet ist oder sind, **dadurch gekennzeichnet, daß** die Vorrichtung Bypassleitungen (20, 21) für die Wasserführung mit Absperrventilen (22, 23) hat, sodaß bei entsprechender Betätigung der Absperrventile (22, 23) und der in die Zu- und Abflußleitungen (24, 25) eingesetzten Hauptabsperrventile (26, 27) eine Verringerung oder Umkehr der Strömungsrichtung des Wassers im Quarzglasrohr (2) erfolgt und damit eine Auf- und Abbewegung eines in das Quarzglasrohr (2) eingesetzten, längs des Quarzglasrohrers (2) mit der Wasserströmung verschiebbaren Reinigungsstöpsels (36) bewirkt wird, wobei der Reinigungsstöpsel (36) aus einem den Wasserdurchfluß sperrenden Glied (50) und wenigstens einer an der Innenfläche des Quarzglasrohrs (2) entlang streifenden Reinigungsbürste und/oder Reinigungslippe (37) besteht.

2. Vorrichtung nach Anspruch 1 , **dadurch gekennzeichnet, daß** an beiden Enden des Quarzglasrohres (2) Stutzen (35) mit vergrößertem Durchflußquerschnitt angebracht sind, welche den Reinigungsstöpsel (36) in seinen Endlagen aufnehmen und den Wasserdurchfluß freigeben.

3. Vorrichtung nach Anspruch 2, **dadurch gekennzeichnet, daß** die Stutzen (35) mit einer inneren konischen Erweiterung versehen sind, in die jeweils ein Haltekorb (38) für den Reinigungsstöpsel (36) eingefügt ist.

4. Vorrichtung nach Anspruch 3, **dadurch gekennzeichnet, daß** die Haltekörbe (38) aus einem an der konischen Innenwand des Stutzens (35) anliegenden Stützring (45) mit davon ausgehenden wenigstens drei Führungsstreben (46) bestehen.

5. Vorrichtung nach Anspruch 2 bis 4, **dadurch gekennzeichnet, daß** die Stutzen (35) mit Nuten (47) in ihrer Innenwand versehen sind.

6. Vorrichtung nach Anspruch 1 bis 5, **dadurch gekennzeichnet, daß** der Reinigungsstöpsel (36) in Axialrichtung symmetrisch ausgebildet ist.

7. Vorrichtung nach Anspruch 1 bis 6 , **dadurch gekennzeichnet, daß** der Reinigungsstöpsel (36) aus einem Kreuzgestänge (40) mit mehreren ringförmigen Reinigungsbürsten und/oder Reinigungslippen (37) gebildet ist.

8. Vorrichtung nach einem der Ansprüche 1 bis 7, **dadurch gekennzeichnet, daß** die innere Oberfläche des Quarzglasrohres (2) mit einer das Anhaften von Schmutzpartikeln vermindernden Rauhigkeit versehen ist.

9. Vorrichtung nach einem der Ansprüche 2 bis 8, **dadurch gekennzeichnet, daß** in die Stutzen (35) Drallplatten (39) zur Verwirbelung des Wassers eingesetzt sind.

10. Vorrichtung nach einem der Ansprüche 1 bis 9, **dadurch gekennzeichnet, daß** durch das Gehäuse (3) gefilterte Luft strömt und daß die elektromagnetischen Wellen des oder der UV-Strahler (4) sowohl im Gewebe zerstörenden Bereich von 254,7 nm als auch im Ozon erzeugenden Bereich unterhalb von 180 nm liegen.

11. Vorrichtung nach einem der Ansprüche 1 bis 10, **dadurch gekennzeichnet, daß** das in der Luft erzeugte Ozon im gereinigten Wasser eine Oxidation der organischen Verbindungen bewirkt.

## Claims

1. A device for sterilising water by means of UV rays, comprising a quartz glass tube connected to inlet and cutlet pipes, through which the water flows, and a housing containing the quartz glass tube, which forms a chamber in which the UV emitter or emitters is or are arranged, **characterised in that** the device has bypass pipes (2, 21) for the water supply provided with shut-of valves (22, 23) so that when the shut-off valves (22, 23) and the main shut-off valve (26, 27) inserted in the inlet and outlet pipes (24, 25) are appropriately actuated, a reduction or reversal of the direction of flow of the water in the quartz glass tube (2) takes place, thus effecting an upward or downward movement of a cleaning stopper (36) inserted in the quartz glass tube (2) and displaceable along the quartz glass tube (2) with the water flow, wherein the cleaning stopper (36) consists of a member (50) which blocks the flow of water and at least one cleaning brush and/or cleaning lip (37) which sweeps along the inner surface of the quartz glass tube (2).

2. The device according to claim 1, **characterised in that** connecting pieces (35) having an enlarged flow cross-section are attached to both ends of the quartz glass tube (2), which receive the cleaning stopper (36) in its end positions and release the water flow.

3. The device according to claim 2, **characterised in that** the connecting pieces (35) are provided with an inner conical expansion into which respectively one retaining basket (38) for the cleaning stopper (36) is inserted.

4. The device according to claim 3, **characterised in that** the retaining baskets (38) consist of a support ring (45) which abuts against the conical inner wall of the connecting piece (35) and which is provided with at least three guide struts (46) emanating therefrom.

5. The device according to claim 2 to 4, **characterised in that** the connecting pieces (35) are provided with grooves (47) in their inner wall.

6. The device according to claim 1 to 5, **characterised in that** the cleaning stopper (36) is embodied as symmetrical in the axial direction.

7. The device according to claim 1 to 6, **characterised in that** the cleaning stopper (36) is formed from a cross framework (40) comprising a plurality of annular cleaning brushes and/or cleaning lips (37).

8. The device according to any one of claims 1 to 7, **characterised in that** the inner surface of the quartz glass tube (2) is provided with roughness to reduce the adhesion of contaminant particles.

9. The device according to any one of claims 2 to 8, **characterised in that** swirl plates (39) are inserted in the connecting pieces (35) to induce turbulence of the water.

10. The device according to any one of claims 1 to 9, **characterised in that** filtered air flows through the housing (3) and the electromagnetic waves of the UV emitter or emitters (4) lie in the tissue-destroying range of 254.7 nm and in the ozone-generating range below 180 nm.

11. The device according to any one of claims 1 to 10, **characterised in that** the ozone produced in the air causes oxidation of the organic compounds in the purified water.

## Revendications

1. Dispositif pour la désinfection de l'eau au moyen de rayons UV, avec un tuyau en silice vitreuse à travers lequel coule l'eau et qui est raccordé aux conduites d'arrivée et d'écoulement d'eau et entouré d'un caisson formant une chambre, dans laquelle sont placés le ou les émetteurs UV, **caractérisé en ce que** le dispositif comporte des conduites de dérivation (20, 21) pour diriger l'eau avec des robinets d'isolement (22, 23), de manière à pouvoir réduire ou inverser la direction de l'écoulement d'eau dans le tuyau en silice vitreuse (2) lors de l'actionnement approprié des robinets d'isolement (22, 23) et des valves principales de fermeture (26, 27) intégrées dans les conduites d'arrivée et d'écoulement d'eau (24, 25), et de manière à générer un mouvement de haut en bas du bouchon d'assainissement (36) situé dans le tuyau en silice vitreuse (2) et se déplaçant le long du tuyau avec le flux d'eau, sachant que le bouchon d'assainissement est constitué d'un maillon (50) qui stoppe l'écoulement d'eau et d'au moins une brosse de nettoyage et / ou lèvre de nettoyage (37) passant le long de la surface interne du tuyau en silice vitreuse (2).

2. Dispositif selon la revendication 1, **caractérisé en ce que** des supports (35) avec un diamètre de débit agrandi sont fixés aux deux extrémités du tuyau en silice vitreuse (2), permettant de recevoir le bouchon d'assainissement (36) en position finale et de libérer l'écoulement d'eau.

3. Dispositif selon la directive 2, **caractérisé en ce que** les supports (35) sont pourvus d'une extension conique interne, dans laquelle se trouve un panier de maintien (38) pour le bouchon d'assainissement (36).

4. Dispositif selon la directive 3, **caractérisé en ce que** les paniers de maintien (38) se constituent d'un anneau de soutien (45), en contact avec la paroi interne conique des supports (35), duquel partent au moins trois tiges de direction (46).

5. Dispositif selon les directives 2 à 4, **caractérisé en ce que** la paroi interne des supports (35) est pourvue de rainures (47).

6. Dispositif selon les directives 1 à 5, **caractérisé en ce que** le bouchon d'assainissement (36) a une forme symétrique par rapport à l'axe.

7. Dispositif selon les directives 1 à 6, **caractérisé en ce que** le bouchon d'assainissement (36) est constitué de tringles en croix (40) avec plusieurs brosses de nettoyage et / ou lèvres de nettoyage (37) circulaires.

8. Dispositif selon l'une des directives 1 à 7, **caractérisé en ce que** la paroi interne du tuyau en silice vitreuse (2) est rugueuse, permettant ainsi de réduire l'adhésion de particules de saleté.

9. Dispositif selon l'une des directives 1 à 8, **caractérisé en ce que** des hélices (39) sont placées dans les supports (35) pour faire tourbillonner l'eau.

10. Dispositif selon l'une des directives 1 à 9, **caractérisé en ce que** de l'air filtré passe à travers le caisson (3) et que les ondes électromagnétiques du ou des émetteurs UV (4) sont inférieures à 180 nm, aussi bien dans la partie chargée d'éliminer les particules, à 254,7 nm, que dans la partie produisant de l'ozone.

11. Dispositif selon l'une des directives 1 à 10, **caractérisé en ce que** l'ozone produit dans l'air entraîne une oxydation des composés organiques dans l'eau purifiée.
